# EUROPÄISCHE PATENTSCHRIFT

(11) **EP 3 277 974 B1**
(45) Veröffentlichungstag und Bekanntmachung des Hinweises auf die Patenterteilung: **04.09.2019**
(21) Anmeldenummer: 16711619.3
(22) Anmeldetag: 22.03.2016
(51) Int. Cl.: F16D 55/226, F16D 66/02

(54) **SCHEIBENBREMSE FÜR EIN NUTZFAHRZEUG**
DISC BRAKE FOR A UTILITY VEHICLE
FREIN À DISQUE POUR VÉHICULE UTILITAIRE

(30) Priorität: 31.03.2015 DE 102015104916
(43) Veröffentlichungstag der Anmeldung: 07.02.2018
(73) Patentinhaber: KNORR-BREMSE Systeme für Nutzfahrzeuge GmbH, 80809 München (DE)
(72) Erfinder: STÖGER, Christian, 94486 Osterhofen (DE); HUBER, Stefan, 94501 Aldersbach (DE); MENZ, Christian, 94036 Passau (DE); RENTSCHLER, Andreas, 94526 Metten (DE)
(86) Internationale Anmeldenummer: PCT/EP2016/056289
(87) Internationale Veröffentlichungsnummer: WO 2016/156120

(56) Entgegenhaltungen:
- DE-A1-102008 034 653
- DE-A1-102009 025 875
- DE-T2- 60 109 332

## Beschreibung

Die Erfindung betrifft eine Scheibenbremse für ein Nutzfahrzeug nach dem Oberbegriff des Anspruchs 1.

Um die Betriebssicherheit einer Scheibenbremse zu überwachen sind Verschleißeinrichtungen bekannt, durch die ein Verschleiß der Bremsbeläge und/oder der Bremsscheibe möglich ist, so dass ein erforderlicher Austausch des betroffenen Bauteiles zu einem bestmöglichen Zeitpunkt erfolgt. Dabei soll der Verschleißzustand der Bremsbeläge möglichst genau festgestellt werden.

Aus Kostengründen wird der Austausch der Bremsbeläge zu einem optimalen Zeitpunkt gefordert, wobei angestrebt wird, einen Austausch erst dann vorzunehmen, wenn der jeweilige Reibbelag der Bremsbeläge bis auf eine zulässige Minimaldicke abgenutzt ist. Ein früherer Austausch würde einer stets angestrebten Optimierung der Betriebskosten entgegenstehen, während ein zu später Austausch eine Beeinträchtigung der Funktionssicherheit der Scheibenbremse insgesamt nach sich ziehen würde.

Um den Verschleißzustand der Bremsbeläge zu erkennen, sind verschiedene konstruktive Lösungen bekannt. So ist eine Verschleißanzeige im Einsatz, bei der durch die Belagträgerplatte ein strom leitendes Kabel geführt wird, das bei Verschleiß des Reibbelages durchtrennt wird, was durch ein Signal in einem üblicherweise im Fahrerhaus des Kraftfahrzeuges angeordneten Signalgeber erkennbar ist.

Daneben sind Verschleißanzeigen bekannt, die mittels eines Drehpotentiometers eine bei einer Nachstellung der Bremsbeläge zum Ausgleich einer verschleißbedingten Änderung des Lüftspiels, d.h. des Abstands zwischen dem Bremsbelag und der Bremsscheibe sich ergebende Verfahrstrecke einer Nachstelleinrichtung ermitteln. Dies ist ebenfalls, beispielsweise durch den Fahrer des Fahrzeuges, anhand einer Anzeigeeinrichtung erkennbar.

Zur unmittelbar optischen Erkennung des Verschleißzustandes der Bremsbeläge findet eine gattungsgemäße Einrichtung Verwendung, die einen im Bremssattel geführten federbelasteten Stift aufweist, durch den eine verschleißbedingte Verstellung des Bremssattels erkennbar wird.

Jedoch ist die Realisierung einer solchen Verschleißanzeige mit erheblichem baulichem Aufwand verbunden, ebenso wie die der übrigen bekannten Verschleißanzeigen. Beispielsweise ist zur Führung des Stiftes eine aufwändige Bearbeitung des Bremssattels erforderlich.

Die erwähnten elektrischen Verschleißanzeigen sind nur mit einem erheblichen apparativen Aufwand zu verwirklichen und können überdies, aufgrund des rauen Betriebs, bei dem Nutzfahrzeuge vielfach eingesetzt werden, eine absolut zuverlässige Funktion nicht gewährleisten.

Zur visuellen Erkennung des Verschleißzustandes der Bremsbeläge bzw. der Bremsscheibe ist in der DE 36 12 166 C2 vorgeschlagen, den Bremsträger mit einer Markierung zu versehen, die in Korrespondenz mit einer entsprechend modifizierten Belagträgerplatte der Verschleißerkennung dient.

Dabei werden die bremsträgerseitigen Markierungen durch eine entsprechende Formgebung hergestellt, insbesondere durch U- oder V-förmige Ausnehmungen im Sinne von Kerben.

Allerdings haben solche Ausnehmungen, aber auch andere notwendige Formgebungen, Einfluss auf die Festigkeit des Bremsträgers, wobei vor allem die Kerben zu einer Minderung der Dauerbruchfestigkeit führen.

Allen Einrichtungen zur Verschleißerkennung gemeinsam ist, dass sie im Wesentlichen nur bei demontiertem Fahrzeugrad erkennbar sind, was einer angestrebten einfachen Verwendung der Einrichtung entgegensteht.

In der DE 10 2008 034653 A1 ist eine Scheibenbremse offenbart, die ein streifenförmiges Vergleichselement aufweist, das am Bremsträger befestigt ist. Als miteinander korrespondierende Markierungen, die sich, je nach Verschleiß, relativ zueinander bewegen, ist eine am Bremssattel befestigte Hülse vorgesehen, deren freie Stirnkante als eine Markierung dient und als andere Markierung die freie Stirnkante des sich entgegengesetzt zur Bremsscheibe erstreckenden streifenförmigen Vergleichselements.

Eine davon abweichende Konstruktion ist aus der DE 601 09 332 T2 bekannt. Zur Verschleißerkennung dient hier ein an der Belagträgerplatte eines Bremsbelages befestigtes Vergleichselement, das in Bezug steht zu einem auf der Belagträgerplatte gehaltenen Reibbelag.

Der Erfindung liegt die Aufgabe zugrunde, eine Scheibenbremse der gattungsgemäßen Art so weiterzuentwickeln, dass mit geringem konstruktivem und fertigungstechnischem Aufwand eine einfache, zuverlässige und genaue Verschleißanzeige des Bremsbelages möglich ist.

Diese Aufgabe wird durch eine Scheibenbremse mit den Merkmalen des Anspruchs 1 gelöst.

Das erfindungsgemäß am Bremsträger bevorzugt durch Verrasten befestigte streifenförmige Vergleichselement, das sich in Verschieberichtung des Bremssattels und entgegengesetzt zur Bremsscheibe erstreckt und mit in Verschieberichtung des Bremssattels kantenseitig mindestens eine Abstufung aufweist, ist besonders einfach und kostengünstig herzustellen und zu montieren.

Daraus ergibt sich eine erhebliche Kostenreduzierung gegenüber den erwähnten Verschleißkontakten oder einer kontinuierlichen Verschleißsensierung durch den beschriebenen Potentiometer.

Da, wie erwähnt, Verschleißteile, beispielsweise Schleifkontakte nicht mehr zum Einsatz kommen, entsteht auch kein Abrieb, der sich ansonsten hinsichtlich einer Umweltbelastung als nachteilig darstellt.

Darüber hinaus ist eine genaue Anzeige des Verschleißzustandes der Bremsbeläge und der Bremsscheibe von außen her ohne Demontage der Radfelge möglich. Dabei ist diese Art der Anzeige insofern unproblematisch, als sie ohne Verschleißteile auskommt, woraus sich eine hohe Zuverlässigkeit ergibt.

Eine Erkennung von Zwischenzuständen des Verschleißes in vorbestimmten Abständen, beispielsweise in 50 %-Abständen, kann dadurch erreicht werden, dass mehrere Abstufungen vorgesehen sind, so dass eine stets ausreichende Abschätzung des Verschleißzustandes problemlos möglich ist.

Dem Grundsatz nach erfolgt die optische Erkennbarkeit des Verschleißzustandes der Bremsbeläge und der Bremsscheibe in Korrespondenz mit einer Kante des Bremssattels, die bei Erreichen einer minimal zulässigen Dicke des Reibbelages erkennbar mit der entsprechenden Abstufung fluchtet.

Da das Vergleichselement als separates Bauteil vorliegt, ist eine Veränderung des Bremsträgers bzw. anderer Bauteile der Scheibenbremse nicht erforderlich.

Ein weiterer Gedanke der Erfindung sieht vor, das Vergleichselement aus einem Blech zu fertigen, wobei an einen Haltebügel mindestens ein Rastelement angeformt ist, das in eine Rastöffnung des Bremsträgers eingreift.

An den Haltebügel schließen sich bevorzugt zwei parallel und abständig zueinander angeordnete Schenkel an, in die die Abstufungen eingebracht sind. Diese Ausführung zeichnet sich insbesondere dadurch aus, dass die Montage äußerst einfach manuell erfolgen kann und keine zusätzliche Montagestation benötigt.

Sollte das Vergleichselement im Betrieb beschädigt werden oder verloren gehen, kann mit einer solchen Montage ein Ersatzteil ohne wesentlichen Aufwand befestigt werden.

Als besonders vorteilhaft ist die prinzipiell universelle Einsetzbarkeit des neuen Vergleichselementes hervorzuheben, die es ermöglicht, eine nachträgliche Bestückung einer bereits am Fahrzeug montierten Scheibenbremse mit einem erfindungsgemäßen Vergleichselement durchzuführen.

Alternativ zur angegebenen Materialauswahl des Vergleichselementes aus Blech, kann dies auch als Kunststoffteil oder aus einem Verbundwerkstoff Metall/Kunststoff hergestellt sein.

Anstelle einer mit dem Vergleichselement korrespondierenden Kante des Bremssattels können als Referenzen auch andere Formen dienen, wenn diese in der genannten Art und Weise in Korrespondenz mit dem Vergleichselement ohne Demontage der Radfelge einsehbar sind.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teil einer erfindungsgemäßen Scheibenbremse in unterschiedlichen, verschleißbedingten Stellungen
- Figur 2: eine Einzelheit der Scheibenbremse in einer perspektivischen Ansicht
- Figur 3: die Einzelheit nach Fig. 2 in montierter Stellung, gleichfalls perspektivisch gezeigt
- Figur 4: einen vergrößerten Ausschnitt der Scheibenbremse nach Fig. 1
- Figur 5: einen weiteren vergrößerten Ausschnitt in unterschiedlichen Montagepositionen der Einzelheit nach Fig. 2.

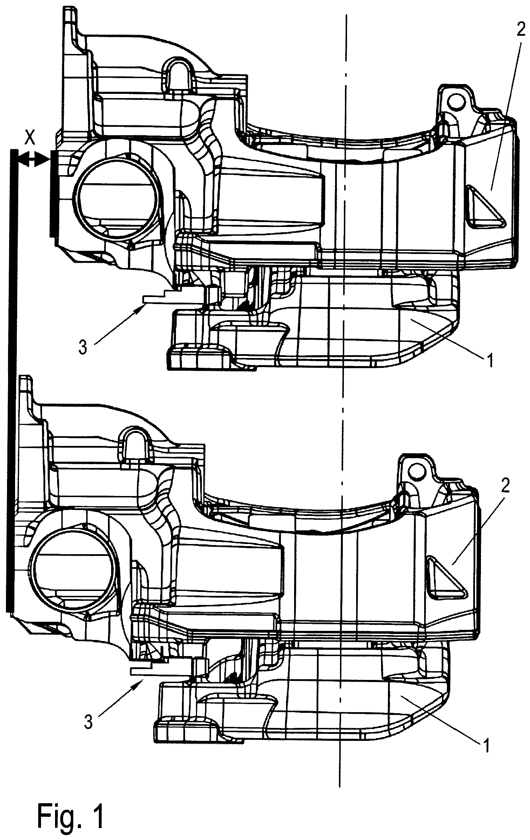

In der Figur 1 ist ein an einem fahrzeugseitigen Bremsträger als Schiebesattel ausgebildeter Bremssattel 2 einer Scheibenbremse gezeigt, der eine nicht dargestellte Bremsscheibe übergreift. Der Bremssattel 2 ist, bezogen auf die Bremsscheibe, axial verschiebbar am Bremsträger 1 gehalten, wobei hierzu mit dem Bremsträger 1 verbundene Führungsholme vorgesehen sind.

Im Bremssattel 2 bzw. im Bremsträger 1 sind zwei ebenfalls nicht dargestellte Bremsbeläge angeordnet, die bei einer Bremsung mittels einer am Bremssattel 2 positionierten Zuspanneinrichtung gegen die Bremsscheibe pressbar sind. Jeder Bremsbelag besteht aus einer Belagträgerplatte und einem die Bremsscheibe im Fall einer Bremsung kontaktierenden Reibbelag.

Dieser Reibbelag, gleichermaßen die Bremsscheibe, unterliegen einem Verschleiß im Sinne eines Abriebs, durch den sich die Stellung des Bremssattels 2 gegenüber dem Bremsträger 1 verändert. Dieses Verschleißmaß ist in der Figur 1 mit X angegeben, wobei die obere Abbildung die Stellung des Bremssattels 2 mit unverschlissenen Bremsbelägen und die untere Abbildung mit bis zu einer Minimaldicke abgeriebenen Bremsbelägen wiedergeben.

Zur Kontrolle des Verschleißes, vor allem jedoch zur Erkennung des Erreichens einer zulässigen Verschleißgrenze ist eine Verschleißerkennung vorgesehen, die, gemäß der Erfindung aus einem streifenförmigen Vergleichselement 3 besteht, das sich in Verschieberichtung des Bremssattels 2 und entgegengesetzt zur Bremsscheibe erstreckt.

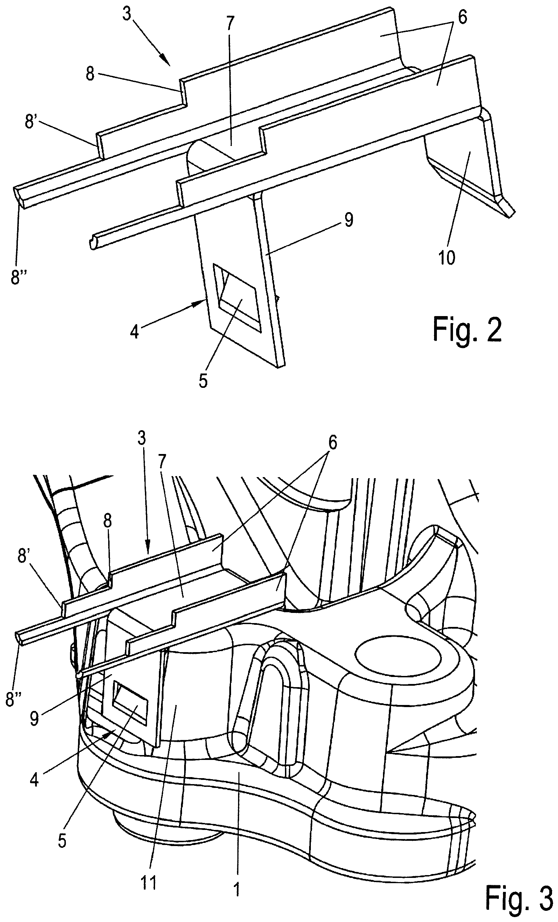

Dabei ist das Vergleichselement 3, das als Einzelheit in der Figur 2 dargestellt ist, am Bremsträger 1 befestigt und als Blechformteil ausgebildet.

Bei diesem Ausführungsbeispiel weist das Vergleichselement 3 zwei parallel und abständig zueinander angeordnete Schenkel 6, mit durchgehend planebenen Seitenflächen auf, die kantenseitig mit zwei Abstufungen 8, 8' versehen sind.

Während eine in Verschieberichtung des Bremssattels 2 erste Abstufung 8 die Position eines neuen, d.h. unverschlissenen Bremsbelages gegenüber dem Bremsträger 1 erkennen lässt, ist bei Erreichen einer Bezugskante des Bremssattels zur zweiten Abstufung 8' ein etwa 50 %-iger Verschleiß des Reibbelages erkennbar.

Das Erreichen der maximal zulässigen Verschleißgrenze ist durch Fluchten des freien Endes 8" des Schenkels 6 mit der genannten Bezugskante des Bremssattels 2 ersichtlich.

Wie erwähnt sind im Beispiel nach Figur 2 zwei parallel und abständig zueinander angeordnete Schenkel 6 vorgesehen, die durch einen Steg 7 miteinander verbunden sind, der wiederum Bestandteil eines Haltebügels 4 ist, der mit dem Bremsträger verrastet ist. Dabei ist das Vergleichselement in Erstreckungsrichtung spiegelsymmetrisch gestaltet. Statt zweier Schenkel 6 wird die Funktion des Vergleichselements 3 auch mit lediglich einem Schenkel 6 erreicht, an den sich vorzugsweise rechtwinklig dazu erstreckend der Steg 7 anschließt.

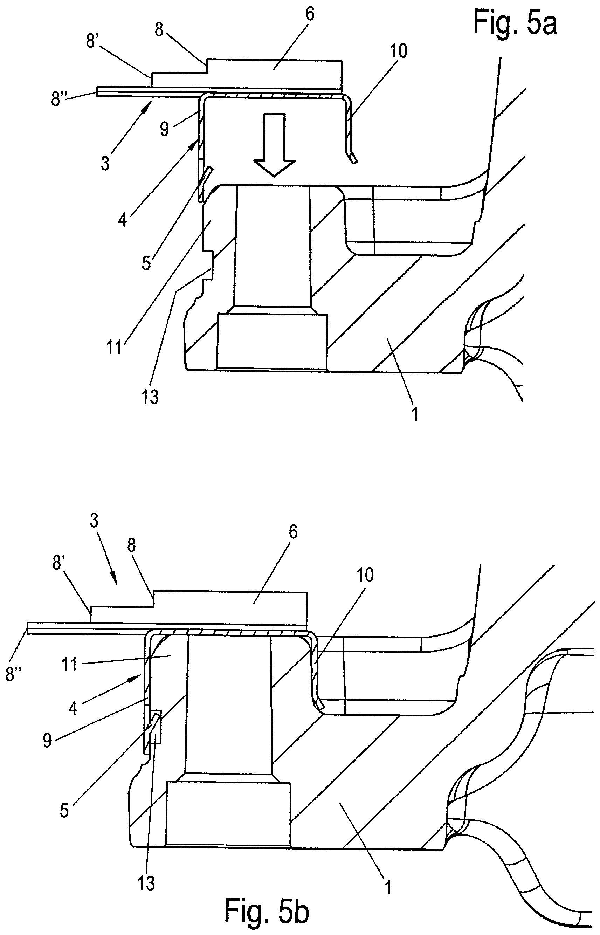

Zur Befestigung des Haltebügels 4 sind zwei parallel und abständig zueinander angeordnete, gemeinsam mit dem Steg 7 eine U-förmige Kontur beschreibende Laschen 9, 10 angeformt, wobei die eine Lasche 9 ein als Widerhaken 5 geformtes Rastelement aufweist, das in eine Aussparung 13 eines Anschlusshöckers 11 des Bremsträgers 1 formschlüssig eingreift. Dies ist insbesondere in den Figuren 5 deutlich zu erkennen, wobei die Figur 5a) eine Position wiedergibt vor dem Aufschieben des Vergleichselements 3 auf den Anschlusshöcker 11. Die Figur 5b) hingegen zeigt das fertig montierte und mit dem Anschlusshöcker 11 verrastete Vergleichselement 3.

Anstelle des Formschlusses besteht auch die Möglichkeit, das Vergleichselement 3 beispielsweise durch Verschrauben mit dem Bremsträger 1 zu verbinden, wobei hierzu der Haltebügel 4 oder ein vergleichbares Befestigungsteil ebenso wie der Anschlusshöcker 11 entsprechend modifiziert sein müssen.

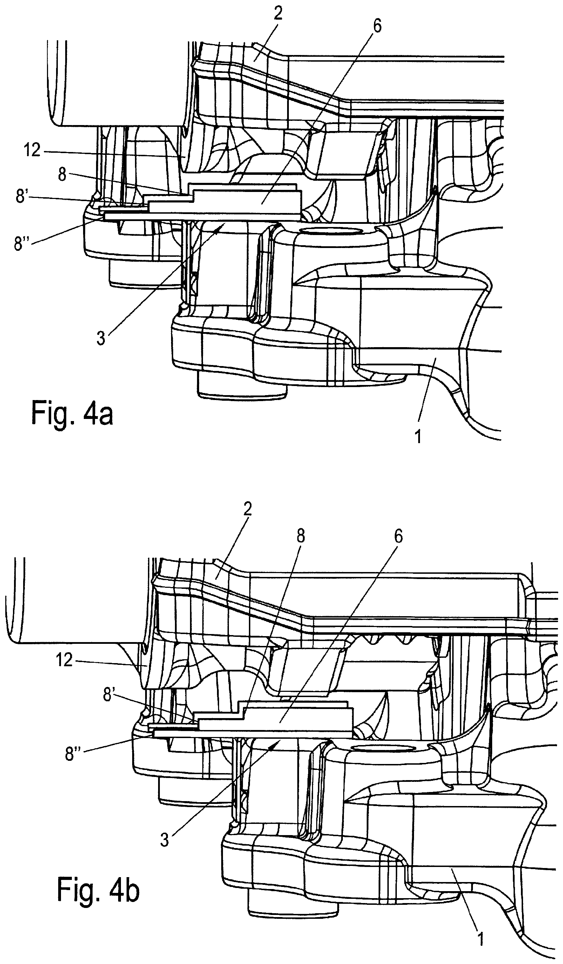

In den Figuren 4a) und 4b) ist das Vergleichselement 3 in Bezug auf die unterschiedlichen Stellungen des Bremssattels 2 vor und nach einer verschleißbedingten Verschiebung erkennbar.

Dabei gibt die Figur 4b) die Position wieder, die der Bremssattel 2 bei Erreichen einer zulässigen Verschleißgrenze der Bremsbeläge einnimmt, in der eine Kante 12 des Bremssattels 2 visuell mit dem freien Ende 8" des Vergleichselementes 3 fluchtet.

In der Figur 4a) ist die Position des Bremssattels 2 wiedergegeben, in der die Bremsbeläge noch nicht im Sinne eines Abriebs beansprucht sind. Dabei fluchtet die Kante 11 mit der ersten Abstufung 8, was für einen Beobachter von außen her ohne weiteres und deutlich zu erkennen ist. Der Abstand der ersten Abstufung 8 zum abgesetzten freien Ende 8" des Schenkels 6 entspricht somit dem Abstand X in der Figur 1.

## Patentansprüche

1. Scheibenbremse, mit einem eine Bremsscheibe übergreifenden, an einem ortsfesten Bremsträger (1), bezogen auf die Bremsscheibe axial verschiebbar gehaltenen Bremssattel (2), in dem Bremsbeläge positioniert sind, die bei einer Bremsung mittels einer Zuspanneinrichtung gegen die Bremsscheibe pressbar sind, wobei eine Einrichtung zur optischen Verschleißerkennung eines Bremsscheiben- und/oder Bremsbelagverschleißes vorgesehen ist, **dadurch gekennzeichnet, dass** zur Verschleißerkennung am Bremsträger (1) ein in Verschieberichtung des Bremssattels (2) und entgegensetzt zur Bremsscheibe sich erstreckendes Vergleichselement (3) befestigt ist, das streifenförmig ausgebildet ist, mit durchgehend planebenen Seitenflächen und in Verschieberichtung des Bremssattels (2) und an einer dem Bremssattel zugewandten Kante mindestens eine Abstufung (8, 8') aufweist.

2. Scheibenbremse nach Anspruch 1, **dadurch gekennzeichnet, dass** der Abstand von einer ersten Abstufung (8) zum in Verschieberichtung des Bremssattels (2) freien Ende (8") des Vergleichselementes (3) einem maximal zulässigen Verschleißmaß (X) entspricht.

3. Scheibenbremse nach Anspruch 1 oder 2, **dadurch gekennzeichnet, dass** das Vergleichselement aus einem Formteil gebildet ist, bestehend aus Metall, insbesondere Blech, Kunststoff oder einer Kombination beider Materialien.

4. Scheibenbremse nach einem der vorhergehenden Ansprüche, **dadurch gekennzeichnet, dass** das Vergleichselement (3) einen Schenkel (6) aufweist, an dem die Abstufungen (8, 8') durch Ausklinken ausgebildet sind.

5. Scheibenbremse nach einem der vorhergehenden Ansprüche, **dadurch gekennzeichnet, dass** zwei parallel und abständig zueinander angeordnete Schenkel (6) vorgesehen sind, von denen jeder mit mindestens einer Abstufung (8, 8') versehen ist.

6. Scheibenbremse nach Anspruch 5, **dadurch gekennzeichnet, dass** an zumindest einen Schenkel (6) abgewinkelt ein Steg (7) angeformt ist, der zwei Laschen (9, 10) eines U-förmigen Haltebügels (4) miteinander verbindet.

7. Scheibenbremse nach Anspruch 6, **dadurch gekennzeichnet, dass** der Haltebügel (4) mit dem Bremsträger (1) verrastet ist.

8. Scheibenbremse nach einem der Ansprüche 6 oder 7, **dadurch gekennzeichnet, dass** eine Lasche (9) ein Rastelement, vorzugsweise in Form eines Widerhakens (5) aufweist, das in eine Aussparung des Bremsträgers (1) eingreift.

9. Scheibenbremse nach einem der Ansprüche 6 bis 8, **dadurch gekennzeichnet, dass** der Haltebügel (4) an einem Anschlusshöcker (11) des Bremsträgers (1) befestigt ist.

10. Scheibenbremse nach einem der vorhergehenden Ansprüche, **dadurch gekennzeichnet, dass** das Vergleichselement (3) bei Ausbildung mit zwei Schenkeln (6) in Erstreckungsrichtung spiegelsymmetrisch ausgebildet ist.

## Claims

1. A disc brake having a brake calliper (2) that straddles a brake disc, is held on a stationary brake carrier (1) in such a way that it can be moved axially in relation to the brake disc and in which are positioned brake pads that can be pressed against the brake disc by means of a brake application device during a braking operation, there being provided a device for the visual wear detection of brake disc wear and/or brake pad wear, **characterised in that** there is secured on the brake carrier (1) for the purpose of wear detection a comparison element (3) that extends in the direction of movement of the brake calliper (2) and opposite to the brake disc, is of strip-shaped design with continuously planar lateral surfaces and has at least one step (8, 8') on an edge facing the brake calliper in the direction of movement of the brake calliper (2).

2. A disc brake according to claim 1, **characterised in that** the distance from a first step (8) to the end (8") of the comparison element (3) that is free in the direction of movement of the brake calliper (2) corresponds to a maximum permissible amount of wear (X).

3. A disc brake according to claim 1 or 2, **characterised in that** the comparison element takes the form of a formed part consisting of metal, in particular sheet metal, of plastic or of a combination of both materials.

4. A disc brake according to any one of the preceding claims, **characterised in that** the comparison element (3) has a limb (6) on which the steps (8, 8') are formed by notching.

5. A disc brake according to any one of the preceding claims, **characterised in that** there are provided two limbs (6) arranged parallel to and at a distance from one another, each of which is provided with at least one step (8, 8').

6. A disc brake according to claim 5, **characterised in that** formed at an angle on at least one limb (6) is a web (7) that connects two legs (9, 10) of a U-shaped holding bracket (4) to one another.

7. A disc brake according to claim 6, **characterised in that** the holding bracket (4) is latched to the brake carrier (1).

8. A disc brake according to one of claims 6 or 7, **characterised in that** one leg (9) has a latching element, preferably in the form of a barb (5), that engages in a recess in the brake carrier (1).

9. A disc brake according to any one of claims 6 to 8, **characterised in that** the holding bracket (4) is secured on a connection hump (11) of the brake carrier (1).

10. A disc brake according to any one of the preceding claims, **characterised in that** when embodied with two limbs (6) the comparison element (3) is of mirror-symmetrical design in the direction of extension.

## Revendications

1. Frein à disque, comprenant un étrier (2) de frein qui chevauche un disque de frein, qui est maintenu avec possibilité de se déplacer axialement par rapport au disque de frein sur un support (1) de frein à poste fixe, et dans lequel sont placées des garnitures de frein qui, lors d'un freinage, peuvent, au moyen d'un dispositif de serrage, être pressées sur le disque de frein, dans lequel il est prévu un dispositif de détection optique de l'usure d'un disque de frein et/ou d'une garniture de frein, **caractérisé en ce que** pour la détection de l'usure, il est fixé, sur le support (1) de frein, un élément (3) de comparaison s'étendant dans le sens de déplacement de l'étrier (2) de frein et dans le sens contraire au disque de frein, élément qui est constitué en forme de bande en ayant des surfaces latérales, dans une grande mesure, planes comme dans un plan, et, dans la direction de déplacement de l'étrier (2) de frein et sur un bord tourné vers l'étrier de frein, a au moins un gradin (8, 8').

2. Frein à disque suivant la revendication 1, **caractérisé en ce que** la distance d'un premier gradin (8) à l'extrémité (8'') libre dans le sens de déplacement de l'étrier (2) de frein, de l'élément (3) de comparaison correspond à une cote (X) d'usure admissible au maximum.

3. Frein à disque suivant la revendication 1 ou 2, **caractérisé en ce que** l'élément de comparaison est formé d'une pièce de forme en métal, notamment en tôle, en matière plastique ou en une combinaison des deux matériaux.

4. Frein à disque suivant l'une des revendications précédentes, **caractérisé en ce que** l'élément (3) de comparaison a une branche (6) où les gradins (8, 8') sont constitués par des évidements.

5. Frein à disque suivant l'une des revendications précédentes, **caractérisé en ce qu'**il est prévu deux branches (6) parallèles et à distance entre elles, dont chacune est pourvues d'au moins un gradin (8, 8').

6. Frein à disque suivant la revendication 5
**caractérisé en ce que** coudée sur au moins une branche (6) est formée une entretoise (7) qui relie entre elles deux pattes (9, 10) d'un étrier (4) de maintien en forme de U.

7. Frein à disque suivant la revendication 6,
**caractérisé en ce que** l'étrier (4) de maintien est encliqueté avec le support (1) de frein.

8. Frein à disque suivant l'une des revendications 6 ou 7,
**caractérisé en ce qu'**une patte (9) a un élément d'encliquetage, de préférence sous la forme d'un crochet (5), qui pénètre dans un évidement du support (1) de frein.

9. Frein à disque suivant l'une des revendications 6 à 8,
**caractérisé en ce que** l'étrier (4) de maintien est fixé à un bossage (11) de raccordement du support (1) de frein.

10. Frein à disque suivant l'une des revendications précédentes, **caractérisé en ce que** l'élément (3) de comparaison est constitué, de constitution, de deux branches (6) symétriques comme en un miroir dans la direction dans lequel il s'étend.
